# EUROPÄISCHE PATENTSCHRIFT

(11) **EP 0 608 272 B1**
(45) Veröffentlichungstag und Bekanntmachung des Hinweises auf die Patenterteilung: **05.02.1997**
(21) Anmeldenummer: 92920496.4
(22) Anmeldetag: 01.10.1992
(51) Int. Cl.: G05B 15/02, G05B 19/04, H02J 13/00

(54) **AUTOMATISCHE STEUERUNG EINER KRAFTWERKSANLAGE**
AUTOMATIC CONTROL FOR A POWER STATION
COMMANDE AUTOMATIQUE D'UNE CENTRALE

(30) Priorität: 14.10.1991 DE 4133980
(43) Veröffentlichungstag der Anmeldung: 03.08.1994
(73) Patentinhaber: SIEMENS AKTIENGESELLSCHAFT, 80333 München (DE)
(72) Erfinder: LÖFFEL, Fritz, D-8520 Erlangen (DE); ARNOLDT, Claudius, D-8521 Hessdorf (DE)
(86) Internationale Anmeldenummer: DE9200838
(87) Internationale Veröffentlichungsnummer: WO9308516

(56) Entgegenhaltungen:
- EP-A- 0 235 656
- EP-A- 0 413 044
- DE-A- 4 135 803
- IEEE TRANSACTIONS ON ENERGY CONVERSION Bd. 3, Nr. 3, September 1988, NEW YORK US Seiten 548 - 553 , XP000112470 IIOKA ET AL 'hierarchical function-structured and autonomous control systems for fossil power plants'
- REGELUNGS-TECHNISCHE PRAXIS Bd. 24, Nr. 6, Juni 1982, MUNCHEN DE Seiten 187 - 191 GIGER 'mensch-mascine-kommunikation vollautomatisierter,diskontinuerlicher prozesse'

## Beschreibung

Die Erfindung betrifft eine automatische Steuerung einer Kraftwerksanlage mit mehreren, untereinander wechselwirkenden Anlagenteilen, mit in einem den Anlagenteilen gemeinsamen Automatisierungssystem verschiedene Funktionen ausübenden Automatisierungsgeräten, wobei die Automatisierungsgeräte miteinander und mit einer Leiteinheit über einen Datenbus verbunden sind, der anlagenrelevante Daten überträgt.

Bei einer aus der EP-A-0 242 609 bekannten Leittechnik für eine Kraftwerksanlage mit verschiedenen Anlagenteilen wird eine Vielzahl von einzeln oder zusammenwirkend zu steuernden und zu regelnden Funktionen durch ein gemeinsames Automatisierungssystem teil- oder vollautomatisch ausgeübt. Das Automatisierungssystem umfaßt eine Anzahl von Automatisierungsgeräten, die über einen gemeinsamen Datenbus miteinander und mit einer Leiteinheit kommunizieren. Eine Datenübertragung zwischen mehreren Automatisierungsgeräten mittels eines sogenannten Neben-Busses ist aus der EP-A-0 413 044 bekannt. Die Automatisierungsgeräte können sowohl aus frei programmierbaren als auch aus speicherprogrammierten Prozessoren aufgebaut sein und steuern und überwachen jeweils mehrere Komponentengruppen oder Teilsysteme der einzelnen Anlagenteile.

Beim Betrieb einer Kraftwerksanlage werden über den Datenbus große Datenmengen in Form von Steuerbefehlen und Zustandsmeldungen sowie Störmeldungen bewegt, die in der Leiteinheit durch Steuereingriffe ausgelöst bzw. auf Bildschirmen oder anderen Sichtgeräten sichtbar gemacht werden. Dabei sind, insbesondere bei Inbetriebnahme und beim Abfahren der Anlage, eine Vielzahl von Steuereingriffen erforderlich, die eine entsprechend große Anzahl von zu beobachtende Rückmeldungen zur Folge haben. Dies führt zu einer nicht unerheblichen Belastung für das Bedienpersonal.

Der Erfindung liegt daher die Aufgabe zugrunde, eine automatische Steuerung für eine Kraftwerksanlage anzugeben, die weitestgehend vereinfacht ist und in allen Betriebsphasen, also auch beim An- und Abfahren der Anlage, sowie im Fall einer Unregelmäßigkeit oder Störung des Prozeßablaufs eine sichere Führung und Überwachung der Anlage ohne Überlastung des Bedienpersonals gewährleistet.

Diese Aufgabe wird bei einer automatischen Steuerung der eingangs genannten Art erfindungsgemäß gelöst durch die kennzeichnenden Merkmale des Anspruchs 1.

Zwar wird in dem Dokument "IEEE Transaction on Energy Conversion", Band 3, Nr. 3, September 1988, New York (US), Seiten 548 - 553 (IIOKA), vorgeschlagen, den Gesamtprozeß einer Kraftwerksanlage funktionsorientert zu strukturieren. Diese Strukturierung bezieht sich allerdings nicht auf ein Automatisierungssystem mit Automatisierungsgeräten, sondern auf ein modular aufgebautes Überwachungssystem ohne logische Verknüpfung von Teilfunktionen innerhalb eines Moduls.

Die verschiedenen funktionsfähigen Einheiten, funktionstechnisch realisiert durch die Funktionsketten, sind innerhalb logischer Prozeßabschnitte stattfindende Medien- und Energietransportabläufe zwischen prozeßtechnischen Halte- bzw. Umwandlungspunkten. Mit anderen Worten: Die Automatisierungsgeräte sind entsprechend der technologischen Struktur der Anlage zu voneinander unabhängig funktionsfähigen Einheiten zusammengefaßt.

Die Funktionsketten sind zweckmäßigerweise während des Anfahrvorgangs und des Abfahrvorgangs der Anlage in einer vorgegebenen Reihenfolge verknüpft. Dabei kommunizieren die Automatisierungsgeräte der verschiedenen Funktionsketten miteinander, so daß prozeßtechnisch die einzelnen funktionsfähigen Einheiten erst bei Bereitstellung der übergeordneten Einheiten in Funktion gesetzt werden. In der Zwischenzeit - während des Betriebs der Anlage - sind die Funktionsketten einzeln ansteuerbar. Dazu sind die Funktionsketten vorteilhafterweise über Datenleitungen mit datenselektiv wirkenden Koppelelementen miteinander und mit dem Datenbus verknüpft.

Innerhalb einer Funktionskette werden vorteilhafterweise nur für eine funktionsfähige Einheit relevante Daten übertragen. Dazu sind die Teilfunktionen innerhalb einer Funktionskette über eine gemeinsame Datenleitung verknüpft.

Der Gesamtprozeß der Anlage kann vorteilhafterweise von nur sechs Funktionsketten gesteuert werden. Diese sechs Funktionsketten sind entsprechend dem logischen Prozeßablauf der Anlage in folgender Reihenfolge hierarchisch organisiert: Versorgung, Entsorgung, Transport von Prozeßabwärme und Rücktransport von Kondensat, Transport von Prozeßwärme, Umwandlung von Primärenergie in Wärmeenergie, sowie Umwandlung der Wärmeenergie in elektrische Energie.

Die mit der Erfindung erzielten Vorteile bestehen insbesondere darin, daß durch eine Aufteilung des Gesamtprozesses einer Kraftwerksanlage in nur wenige, logische Prozeßabschnitte, die jeweils eine funktionsfähige Einheit darstellen, und durch eine entsprechende Gliederung der dazu erforderlichen Funktionen in Funktionsketten ein hoher Automatisierungsgrad mit einer extrem hohen Informationsverdichtung auf nur wenige, zu beobachtende Zustandsmeldungen erreicht wird. Dadurch kann der gesamte Prozeß einer Kraftwerksanlage in jeder Betriebsphase von nur einer Person gesteuert und überwacht werden.

Zur näheren Erläuterung der Erfindung werden anhand einer Zeichnung Ausführungsbeispiele beschrieben; darin zeigt
Figur 1 die Automatisierungstruktur einer Kraftwerksanlage mit mehreren Funktionsketten, und
Figur 2 in einer schematischen Darstellunc ein Signalflußbild einer automatischen Steuerung eines Kraftwerksprozesses mit sechs funktionsfähigen Einheiten.

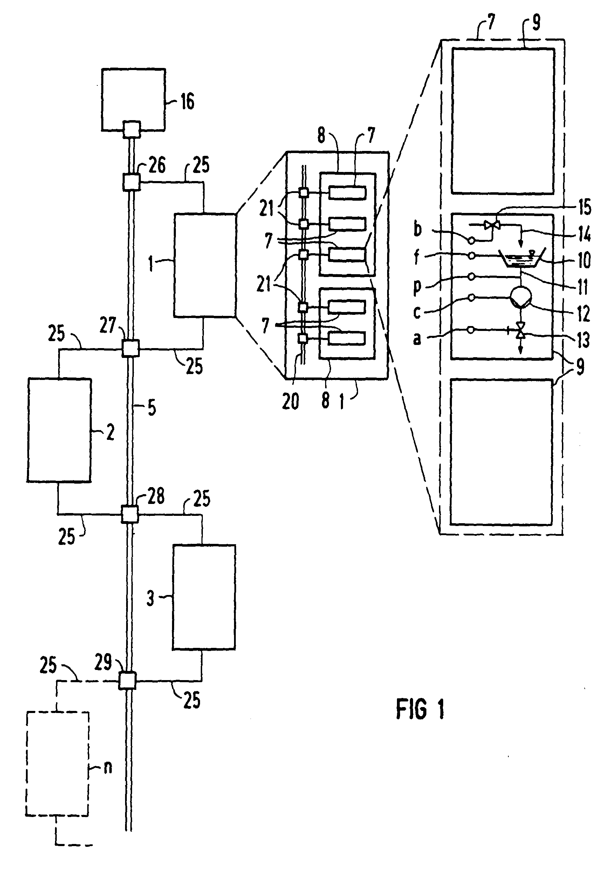

Figur 1 zeigt eine Anzahl von Funktionsketten 1 bis n, die über einen gemeinsamen Datenbus 5 miteinander und mit einer Leiteinheit 16 oder einer der Leiteinheit 16 zugeordneten Blocksteuerung, falls die Kraftwerksanlage über mehrere Blöcke verfügt, verbunden sind. Wie am Beispiel der Funktionskette 1 gezeigt, umfassen die einzelnen Funktionsketten 1 bis n mehrere Teilfunktionen 7, die von z.B. zwei Automatisierungsgeräten 8 ausgeübt werden.

Jeder Teilfunktion 7 sind Teilsysteme 9 einzelner Anlagenteile, z.B. eines Kessels, einer Turbinengruppe oder eines Kondensators zugeordnet. Ein Teilsystem 9 ist hier ein Flüssigkeitsbehälter 10, an den eine Leitung 11 mit einer Pumpe 12 und einem Ventil 13 angeschlossen ist. Dem Behälter 10 kann über eine Leitung 14 mit einem Ventil 15 Flüssigkeit zugeführt werden. Die Teilfunktion 7 umfaßt in diesem Teilsystem 9 die automatische Steuerung der Ventile 13 und 15 sowie der Pumpe 12, symbolisiert durch die Steuersignale a, b bzw. c, von teilweise zusammenwirkend zu regelnden und zu überwachenden Parametern f und p, die hier der Füllstand des Behälters 10 bzw. der Druck in der Leitung 11 sind.

Die Teilfunktionen 7 der Funktionskette 1 sind über eine Datenleitung oder einen Datenbus 20 durch Schnittstellen 21 miteinander verknüpft. Innerhalb der Fuktionskette 1 werden bevorzugt nur für eine zugehörige funktionsfähige Einheit relevante Daten übertragen.

Beim Anfahren der Anlage werden die funktionsfähigen Einheiten, repräsentiert durch die Funktionsketten 1 bis n, durch einen Steuerbefehl nacheinander in Funktion gesetzt und in Funktion gehalten. Dazu sind die den Funktionsketten 1 bis n zugeordneten Automatisierungsgeräte 8 über Datenleitungen 25 und datenselektiv wirkende Koppelelemente 26 bis 29, z.B. intelligente Brücken, miteinander und mit dem Datenbus 5 verknüpft. Durch die Koppelelemente 26 bis 29 werden die einzelnen Funktionsketten l bis n zu lokalen Datenübertragungseinheiten, zwischen denen lediglich einzelne Zustandssignale übertragen werden.

Der Steuerbefehl "Anfahren" aktiviert zunächst die Funktionskette 1. Erst wenn die Funktionskette 1 in Bereitstellung ist, gibt ein entsprechendes Zustandssignal der Funktionskette 1 den Steuerbefehl über das Koppelelement 27 an die Funktionskette 2 weiter. In entsprechender Weise wird die Funktionskette 3 erst beim Bereitstehen der Funktionsketten 1 und 2 aktiviert.

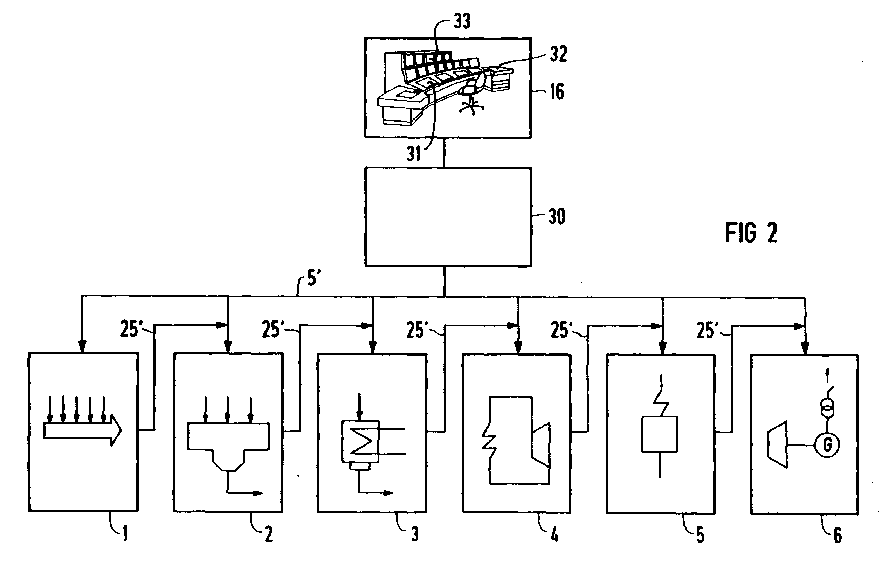

Figur 2 zeigt ein Signalflußbild der automatischen Steuerung eines Blocks einer Kraftwerksanlage mit einem in sechs funktionsfähige Einheiten unterteilten Gesamtprozeß. Die den funktionsfähigen Einheiten entsprechenden Funktionsketten 1 bis 6 sind in einer logischen Reihenfolge hierarchisch organisiert. Dabei sind den einzelnen Funktionsketten 1 bis 6 die in einem gemeinsamen Automatisierungssystem verschiedene Funktionen ausübenden Automatisrerungsgeräte 8, entsprechend der technologischen Struktur der Anlage, zugeordnet.

In der Funktionskette 1, die den Funktionsketten 2 bis 5 vorgeschaltet oder übergeordnet ist, werden z.B. fünf, durch Pfeile symbolisierte Teilfunktionen 7 ausgeübt, die die Gesamtzahl der für die "Versorgung" der Anlage relevanten Aufgaben übernehmen.

In der Funktionskette 2 werden die für die "Entsorgung" der Anlage relevanten Funktionen ausgeübt. Die Funktionskette 2 umfaßt vier Teilfunktionen 7, ebenfalls durch Pfeile symbolisiert.

In der Funktionskette 3 werden die für den Transport von Prozeßabwärme und den Rücktransport von Kondensat erforderlichen Steuereingriffe, z.B. im Kondensator eines aus mehreren Anlagenteilen bestehenden Wasser-Dampf-Kreislaufs einer Dampfturbine, automatisch durchgeführt und überwacht.

In der Funktionskette 4 werden die erforderlichen Steuereingriffe für einen störungsfreien "Transport von Prozeßwärme" im schematisch dargestellten Wasser-Dampf-Kreislauf durchgeführt.

Die Funktionskette 5 führt die für eine "Umwandlung von Primärenergie in Wärmeenergie" erforderlichen Funktionen aus. Dabei werden z.B. die Teiisysteme 9 einer Gasturbinenbrennkammer, ebenfalls schematisch dargestellt, in Funktion gesetzt.

Mit der Funktionskette 6 werden die Teilsysteme 9 von Anlagenteilen zur "Umwandlung der Wärmeenergie in elektrische Energie", z.B. einzelne Stellglieder eines Generators G, in Funktion gesetzt.

Im Ausführungsbeispiel gemäß Figur 2 sind Sie Datenleitungen 5 und 25 aus Figur 1 durch Signalleitungen 5' bzw. 25' symbolisiert.

Bei Inbetriebnahme der Anlage wird ein in der Leiteinheit 16 ausgelöster Steuerbefehl über eine Blocksteuereinheit 30 an die einzelnen Funktionsketten 1 bis 6 weitergeleitet. Sind die der Funktionskette 1 zugeordneten Teilsysteme 9 in Funktion gesetzt, wird von der Funktionskette 1 an die Funktionskette 2 ein Steuersignal übertragen, das zusammen mit dem an der Funktionskette 2 anstehenoen Steuerbefehl die Teilsysteme 9 der Funktionskette 2 in Funktion setzt. In entsprechender Weise werden die Funktionsketten 3 bis 6 nacheinander aktiviert.

Beim Abfahren der Anlage werden in umgekehrter Reihenfolge die Funktionsketten 6 bis 1 durchlaufen und die entsprechenden Prozeßabschnitte nacheinander außer Funktion gesetzt.

Im Normalbetrieb der Anlage können die Teilsysteme 9 der einzelnen Funktionsketten 1 bis 6 über die entsprechenden Automatisierungsgeräte 8 einzeln angesteuert werden. Die Steuerung erfolgt in der Leiteinheit 16 durch Berührung eines als Plasmadisplay ausgebildeten Bildschirms 31, der in einem Steuerpult 32 angeordnet ist. Rückmeldungen, Zustandsmeldungen und Störmeldungen werden auf Bildschirmen 33 visualisiert, die ebenfalls in das Steuerpult 32 eingebaut sind.

Der in einer Kraftwerksanlage ablaufende Gesamtprozeß kann in allen Betriebsphasen von nur einer Person gesteuert und überwacht werden. Daher ist das Steuerpult 32, entsprechend einem Cockpit, kreisbogenförmig ausgebildet.

## Patentansprüche

1. Automatische Steuerung für eine Kraftwerksanlage mit mehreren, untereinander wechselwirkenden Anlagenteilen, mit in einem den Anlagenteilen gemeinsamen Automatisierungssystem verschiedene Funktionen ausübenden Automatisierungsgeräten (8), wobei die Automatisierungsgeräte (8) miteinander und mit einer Leiteinheit (6) über einen Datenbus (5) verbunden sind, der anlagenrelevante Daten überträgt,
**dadurch gekennzeichet,**
daß die Automatisierungsgeräte (8) entsprechend logischen Prozeßabschnitten der Anlage zwischen prozeßtechnischen Halte- oder Umwandlungspunkten von Medien- bzw. Energietransportabläufen zu voneinander unabhängig funktionsfähigen Einheiten zusammengefaßt sind, wobei jede funktionsfähige Einheit einer Funktionskette (1 bis n) entspricht, die mehrere Teilfunktionen (7) umfaßt, wobei die Teilfunktionen (7) einer Funktionskette (1 bis 6) über eine gemeinsame Datenleitung (20) verknüpft sind, die nur für eine funktionsfähige Einheit relevante Daten überträgt. und wobei jede Teilfunktion (7) mehrere Teilsysteme (9) mit steuerbaren Anlagenkomponenten (12, 13, 15) umfaßt.

2. Automatische Steuerung nach Anspruch 1,
**dadurch gekenzeichnet,**
- daß die Funktionsketten (1 bis n) während des Anfahrvorgangs und des Abfahrvorgangs der Anlage in einer vorgegebenen Reihenfolge verknüpft sind, und
- daß die Funktionsketten (1 bis n) in der Zwischenzeit - während des Betriebs der Anlage - einzeln ansteuerbar sind.

3. Automatische Steuerung nach Anspruch 1 oder 2,
**dadurch gekennzeichnet,** daß die Funktionsketten (1 bis n) über Datenleitungen (25) mit datenselektiv wirkenden Koppelelementen (26 bis 29) miteinander und mit dem Datenbus (5) verknüpft sind.

4. Automatische Steuerung nach einem der Ansprüche 1 bis 3,
**dadurch gekennzeichnet,** daß die Funktionsketten (1 bis 6) entsprechend dem logischen Prozeßablauf der Anlage in der Reihenfolge:
a) Versorgung,
b) Entsorgung,
c) Transport von Prozeßabwärme und Rücktransport von Kondensat,
d) Transport von Prozeßwärme,
e) Umwandlung von Primärenergie in Wärmeenergie,
f) Umwandlung der Wärmeenergie in elektrische Energie hierarchisch organisiert sind.

## Claims

1. Automatic control for a power station plant having a plurality of mutually interacting plant parts, with automation devices (8) executing various functions in an automation system shared by the plant parts, the automation devices (8) being connected to one another and to a master control unit (6) via a data bus (5) which transmits plant-relevant data, characterized in that the automation devices (8) are combined, in a way corresponding to logical process sections of the plant, between process-technical holding or conversion points of media and energy transport sequences, to form mutually independently functional units, each functional unit corresponding to a function chain (1 to n) which comprises a plurality of subfunctions (7), and the subfunctions (7) of a function chain (1 to 6) being linked via a common data line (20), which transmits only data relevant for one functional unit, and each subfunction (7) comprising a plurality of subsystems (9) with controllable plant components (12, 13, 15).

2. Automatic control according to Claim 1, characterized
- in that the function chains (1 to n) are linked in a predetermined sequence during the starting-up operation and the shutting-down operation of the plant, and
- in that the function chains (1 to n) are in the meantime - during the operation of the plant - individually activatable.

3. Automatic control according to Claim 1 or 2, characterized in that the function chains (1 to n) are linked to one another and to the data bus (5) via data lines (25) by data-selectively acting coupling elements (26 to 29).

4. Automatic control according to one of Claims 1 to 3, characterized in that the function chains (1 to 6) are hierarchically organized in a way corresponding to the logical process sequence of the plant in the sequence:
a) supply,
b) disposal,
c) transport of waste process heat and return transport of condensate,
d) transport of process heat,
e) conversion of primary energy into thermal energy,
f) conversion of thermal energy into electrical energy.

## Revendications

1. Commande automatique d'une centrale électrique comportant plusieurs parties d'installation intergissant et des appareils d'automatisation (8) exerçant différentes fonctions dans un système d'automatisation commun aux parties d'installation, les appareils d'automatisation (8) étant reliés entre eux et à une unité directrice (6) par l'intermédiaire d'un bus de données (5) qui transmet des données relatives à l'installation,
caractérisée par le fait que
les appareils d'automatisation (8) sont regroupés, en fonction de sections logiques de processus de l'installation entre des points d'arrêt ou de transformation, dans la technique de processus, de processus de transport de milieux ou d'énergie, en des unités capables de fonctionner indépendantes les unes des autres, chaque unité capable de fonctionner correspondant à une chaîne de fonctions (1 à n) qui comprend plusieurs fonctions partielles (7), les fonctions partielles (7) d'une chaîne de fonctions (1 à 6) étant reliées par l'intermédiaire d'une ligne commune de transmission de données (20), qui ne transmet que des données relatives à une unité capable de fonctionner, et chaque fonction partielle (7) comprenant plusieurs systèmes partiels (9) comportant des éléments d'installation (12, 13, 15) pouvant être commandés.

2. Commande automatique selon la revendication 1,
caractérisée par le fait que
- les chaînes de fonctions (1 à n) sont reliées pendant l'opération de démarrage et pendant l'opération d'arrêt de l'installation dans un ordre prescrit, et
- les chaînes de fonctions (1 à n) peuvent entre-temps - c'est-à-dire pendant le fonctionnement de l'installation - être commandées individuel-lement.

3. Commande automatique selon la revendication 1 ou 2,
caractérisée par le fait que
les chaînes de fonctions (1 à n) sont reliées entre elles et au bus de données (5), par l'intermédiaire de lignes de transmission de données (25) munies d'éléments de connexion (26 à 29) agissant de manière sélective par rapport aux données.

4. Commande automatique selon l'une des revendications 1 à 3,
caractérisée par le fait que
les chaînes de fonctions (1 à 6) sont organisées hiérarchiquement, en fonction du déroulement logique du processus de l'installation, dans l'ordre suivant :
a) alimentation,
b) récupération,
c) transport de la chaleur perdue du processus et transport en retour du condensat,
d) transport de la chaleur du processus,
e) transformation de l'énergie primaire en énergie thermique,
f) transformation de l'énergie thermique en énergie électrique.
